# EUROPÄISCHE PATENTSCHRIFT

(11) **EP 2 499 946 B1**
(45) Veröffentlichungstag und Bekanntmachung des Hinweises auf die Patenterteilung: **23.10.2013**
(21) Anmeldenummer: 11010313.2
(22) Anmeldetag: 30.12.2011
(51) Int. Cl.: A47J 31/46

(54) **Heißgetränkemaschine oder -automat**
Hot drinks machine or apparatus
Machine ou automate pour boissons chaudes

(30) Priorität: 15.03.2011 DE 102011013866
(43) Veröffentlichungstag der Anmeldung: 19.09.2012
(73) Patentinhaber: Severin Elektrogeräte GmbH, 59846 Sundern (DE)
(72) Erfinder: Kroesen, Klaus, 46509 Xanten (DE); Voigt, Christian, 46509 Xanten (DE); Krug, Jörg, 35239 Steffenberg (DE); Heuel, Andreas, 57439 Attendorn (DE)
(74) Vertreter: Köchling, Conrad-Joachim

(56) Entgegenhaltungen:
- EP-A1- 0 781 520
- WO-A1-02/058523
- WO-A1-2007/014891
- WO-A2-2008/129376

## Beschreibung

Die Erfindung betrifft eine Heißgetränkemaschine oder -automat, gemäß Oberbegriff des Anspruchs 1.

Derartige Heißgetränkemaschinen oder Heißgetränkeautomaten sind im Stand der Technik bekannt. Bei derartigen Heißgetränkemaschinen oder -automaten ist es üblich, nach dem Brühprozess beziehungsweise Dampfprozess zur Erzeugung des Heißgetränkes die Druckleitungen des Leitungssystems drucklos zu schalten. Wird der Wasserdampf nach dem Austritt nicht gezielt zur Kondensation gebracht, kann dieser unkontrolliert im Geräteinneren kondensieren und gegebenenfalls Gerätefunktionen negativ beeinflussen. Zudem führt das Drucklosschalten der Druckleitungen des Leitungssystems zu einer stoßartigen Ausleitung des Wasserdampfes in den Auffangbehälter und kann dort eventuell vorhandenes Wasser aufwirbeln und dabei zu Verunreinigungen oder unerwünschter Geräuschentwicklung führen.

Aus der DE 202 17 068 U 1 ist beispielsweise eine Heißgetränkemaschine mit einer Restfluidstrecke und einem Ventil zur Abführung des überschüssigen Heißwassers beziehungsweise Wasserdampfes bekannt.

Aus der WO02/058523 A1 ist eine Heißgetränkemaschine ähnlicher Art bekannt, bei der eine weitere Leitung zur Abgabe von überflüssigem Heißwasser nach Fertigstellung des Getränkes dafür sorgt, dass durch einen weiteren ventilgesteuerten Ausgang die mittelbare Verbindung zu einem Auffangbehälter hergestellt wird, der überschüssiges Heißwasser aufnehmen kann.

Zudem ist aus der WO2008/129376 A3 eine weitere Heißgetränkemaschine ähnlicher Art bekannt, bei der überschüssiges Heißwasser über eine ventilgesteuerte Leitung in einen Auffangbehälter abgegeben wird.

Auch bei diesen Lösungen ist es nachteilig, dass das abgegebene Heißwasser beziehungsweise abgegebener Wasserdampf nach dem Austritt aus der weiteren Leitung nicht gezielt zur Kondensation gebracht wird, so dass ein stoßartiges Ausleiten des Heißwassers beziehungsweise Wasserdampfes in den Auffangbehälter erfolgt und dort eventuell vorhandenes Wasser aufwirbelt und dabei beispielsweise zu Verunreinigungen und zu unerwünschter Geräuschentwicklung führt.

Aufgrund des eingangs genannten Standes der Technik liegt der vorliegenden Erfindung die Aufgabe zugrunde, eine Heißgetränkemaschine oder einen Heißgetränkeautomaten der eingangs genannten Art zu schaffen, bei der oder dem ein unkontrolliertes Austreten und/oder Kondensieren des Wasserdampfes beziehungsweise Heißdampfes beim Drucklosschalten der Druckleitungen des Leitungssystems vermieden ist, bei der das Drucklosschalten nahezu geräuschlos erfolgt, bei der gegebenenfalls die Wärmeenergie des Heißwassers beziehungsweise Wasserdampfes einer weiteren Nutzung zugeführt ist, wobei eine einfache Reinigung und eine geräuscharme Betriebsweise erreicht werden soll.

Zur Lösung dieser Aufgabe schlägt die Erfindung vor, dass die Expansions- und / oder Kondensationskammer durch eine etwa schubladenartigen Auffangschale mit deckelartiger Haube gebildet ist, wobei die Haube einerseits am dem Benutzer zugewandten vorderen Endbereich der Auffangschale durch ein als Abstellfläche für Getränkebehälter, insbesondere Tassen, ausgebildetes Tropfblech und andererseits durch eine am dem Benutzer abgewandten Ende der Auffangschale ausgebildete Rippe in der Gebrauchslage gehalten ist, dass an der Haube mehrere, insbesondere vier, elastische Elemente als Standfüße angeordnet oder ausgebildet sind, auf denen die Haube innerhalb der Auffangschale vom Boden der Auffangschale beabstandet steht.

Durch die Anordnung einer derartigen Kammer, in die jeder weitere Ausgang mittelbar oder unmittelbar mündet, kann überschüssiges Heißwasser aus dem Brühprozess oder überschüssiger Wasserdampf aus dem Dampfprozess durch den jeweiligen weiteren Ausgang gezielt aus dem Leitungssystem heraus abgeführt werden, wobei sowohl eine Kondensation und ein durch die Kondensation verursachter Schaden im Gehäuseinneren als auch das Aufwirbeln durch eine stoßartige Ausleitung des Wasserdampfes beziehungsweise Heißwassers und eine damit verbundene Verunreinigung beziehungsweise Geräuschentwicklung vermieden werden. Der Wasserdampf beziehungsweise das unter Druck stehende Heißwasser entspannt sich innerhalb der Expansions- und/oder Kondensationskammer und kann später aus dieser heraus abgeführt werden.

Somit ist durch eine derartige Expansions- und/oder Kondensationskammer zum einen die Lebensdauer der Heißgetränkemaschine oder des Heißgetränkeautomats erhöht und zum anderen eine für den Verbraucher unangenehme Geräuschentwicklung weitestgehend vermieden.

Eine derartige schubladenartige Auffangschale kann auf leichte und einfache Art und Weise vom Benutzer aus der Heißgetränkemaschine beziehungsweise dem Heißgetränkeautomat herausgezogen und beispielsweise nach dem Säubern oder Entleeren wieder in die Maschine eingeschoben werden. Beim Einschieben wird die deckelartige Haube mit dem jeweiligen weiteren Ausgang verbunden und bildet den Kontaktbereich zur Entspannung des Heißwassers und/oder zur Kondensation des Wasserdampfes. Die Haube wird in die schubladenartige Auffangschale eingesetzt und an ihrem dem Benutzer abgewandten Ende von einer an der Auffangschale ausgebildeten Rippe und an der dem Benutzer zugewandten Seite durch ein dort angeordnetes und mit der Auffangschale verbundenes beziehungsweise verbindbares Tropfblech gehalten. Somit ist sichergestellt, dass die Haube auch bei einem höheren Füllstand der schubladenartigen Auffangschale in ihrer Montagesolllage verbleibt und nicht beispielsweise aufschwimmen kann. Zum Reinigen kann der Benutzer die schubladenartige Auffangschale einfach aus der Maschine herausziehen und die einzelnen Teile voneinander trennen. Das heißt in einem ersten Schritt wird das Tropfblech von der Auffangschale entfernt und anschließend die Haube aus der Auffangschale entnommen. Nach erfolgter Reinigung können die Teile in umgekehrter Reihenfolge auf einfache Art und Weise wieder vom Benutzer zusammengesetzt und in die Maschine eingeschoben werden.

Durch die Anordnung derartiger elastischer Elemente als Standfüße an der Haube ist ein weitestgehend vibrationsfreier und somit nahezu geräuschloser Stand der Haube auch während des Brühvorganges innerhalb der Heißgetränkemaschine beziehungsweise des Heißgetränkeautomates ermöglicht. Durch die elastischen Standfüße ist zudem ein sicherer und mit einem Sollabstand vorgesehener Halt der Haube innerhalb der Auffangschale sichergestellt.

Insbesondere kann dabei besonders vorgesehen sein, dass die Expansions- und / oder Kondensationskammer einen ersten Kontaktbereich zur Entspannung des Heißwassers und / oder zur Kondensation des Wasserdampfes und einen Auffangbereich für das entspannte / kondensierte Wasser aufweist.

Durch einen derartigen ersten Kontaktbereich strömt das aus dem jeweiligen weiteren Ausgang austretende Heißwasser beziehungsweise der Wasserdampf gezielt gegen den ersten Kontaktbereich, der beispielsweise aus einer Kühlfläche bestehen kann, so dass eine Entspannung des Heißwassers und/oder eine Kondensation des Wasserdampfes an dieser Fläche beziehungsweise dem Kontaktbereich erfolgen kann. Anschließend kann das kondensierte Wasser beziehungsweise das entspannte Heißwasser von dem Kontaktbereich in weitere Bereiche abfließen.

Darüber hinaus kann besonders bevorzugt vorgesehen sein, dass das als Abstellfläche für Getränkebehälter ausgebildete Tropfblech von der Haube beabstandet ist.

Alternativ kann besonders bevorzugt vorgesehen sein, dass das als Abstellfläche für Getränkebehälter ausgebildete Tropfblech unmittelbar oder mittelbar, beispielsweise durch eine zwischen Haube und Tropfblech angeordnete, aus gut wärmeleitenden Material bestehende Masse mit der Haube verbunden ist.

Je nach vom Verbraucher gewünschter Ausführungsform kann das Tropfblech von der Haube beabstandet oder beispielsweise mittels einer gut wärmeleitenden Masse verbunden sein. Bei der beabstandeten Variante erfolgt kein Wärmeübergang von der Haube auf das Tropfblech. Bei einem unmittelbar auf der Haube angeordneten Tropfblech beziehungsweise bei einer zwischen Haube und Tropfblech angeordneten gut wärmeleitenden Masse erfolgt ein Wärmeübergang von der Haube auf das Tropfblech, so dass beispielsweise auf dem Tropfblech Tassen abgestellt und dort vorgewärmt werden können.

Dabei kann insbesondere besonders bevorzugt vorgesehen sein, dass der durch die Standfüße bedingte Abstand zwischen Haube und Boden der Auffangschale etwa 1 mm beträgt.

Durch den Abstand von etwa 1 mm zwischen den flächigen Teilen der Haube und dem Boden der Auffangschale ist eine optimale Verteilung des aufgefangenen beziehungsweise kondensierten Wassers innerhalb der Auffangschale ermöglicht.

Auch kann besonders bevorzugt vorgesehen sein, dass an der Haube eine Aufnahme für ein am Gehäuse angeordnetes Verbindungsstück zur Übertragung des Heißwassers und / oder Wasserdampfes vom jeweiligen weiteren Ausgang in die Expansions- und / oder Kondensationskammer ausgebildet ist.

Mittels einer derartigen Aufnahme, die an der Haube angeordnet oder ausgebildet ist, ist ein schnelles und sicheres Verbinden mit einem am Gehäuse angeordneten Verbindungsstück zur Übertragung des Heißwassers und/oder Wasserdampfes aus jedem weiteren Ausgang heraus in die Expansions- und/oder Kondensationskammer ermöglicht. Dabei kann die Aufnahme beispielsweise ein Dichtmittel wie einen O-Ring beinhalten, so dass in der verbundenen Lage mit dem Verbindungsstück die Aufnahme gegenüber dem Verbindungsstück druckfest abgedichtet ist.

Darüber hinaus kann besonders bevorzugt vorgesehen sein, dass an der Haube ein napfartiger Bereich zur Aufnahme und Halterung eines Tresterbehälters ausgebildet ist.

Hierdurch kann ein Tresterbehälter zum Auffangen des Tresters mit in die schubladenartige Auffangschale integriert werden, so dass beim Reinigen beziehungsweise Entleeren der Tresterbehälter gleichzeitig mit der Auffangschale und der Haube aus der Heißgetränkemaschine beziehungsweise dem Heißgetränkeautomat herausgezogen und anschließend wieder hineingeschoben werden kann.

Hierdurch ist die Bedienung für den Benutzer erleichtert.

Weiter kann besonders bevorzugt vorgesehen sein, dass am Boden der Auffangschale mindestens eine quer zur Einschubrichtung verlaufende Rippe angeordnet ist, wobei an den entsprechenden Seitenwänden der Haube im Bereich der Rippe eine die Rippe mit geringem Abstand übergreifende Nut angeordnet ist.

Durch eine derartige quer zur Einschubrichtung verlaufende Rippe auf dem Boden der Auffangschale und durch die Nut entsprechend geformten Seitenwänden der Haube ist zum einen ein sicherer Halt und ein leichtes Platzieren der Haube innerhalb der schubladenartigen Auffangschale ermöglicht. Zum anderen dient die Rippe einem gezielten Rückhalt des aufgenommenen Wassers, wobei durch den Abstand zwischen Rippe und Ausnehmungen an der Haube ein Druckausgleich auch bei angestiegenem Wasserpegel dadurch ermöglicht ist, dass das Wasser durch den Abstand zwischen Rippe und Nut abfließen kann.

Auch kann besonders vorgesehen sein, dass der erste Kontaktbereich zur Entspannung des Heißwassers und / oder zur Kondensation des Wasserdampfes durch einen Kühlkörper aus einem gut wärmeleitenden Material, beispielsweise Aluminium, gebildet ist, wobei der Kühlkörper mindestens einen Steg, vorzugsweise mehrere Stege aufweist, mittels derer die aufgenommene Wärme gleichmäßig innerhalb der Kammer verteilt und / oder gezielt an die Umgebung, beispielsweise an die als Tropfblech ausgebildete Abstellfläche für Getränkebehälter, insbesondere Tassen, abgegeben wird oder abgebbar ist.

Ein derartiger Kühlkörper kann zum einen eine große Menge Wärmeenergie aufnehmen, und zum anderen die aufgenommene Wärme gezielt zur Erwärmung abgestellter Getränkebehälter wie beispielsweise Tassen abgeben.

Zudem kann besonders bevorzugt vorgesehen sein, dass im Brühprozess zwischen der Heizung und dem Getränkeauslass und / oder im Dampfprozess zwischen der Heizung und dem Dampfauslass jeweils eine Drossel angeordnet ist.

Dabei kann insbesondere besonders bevorzugt vorgesehen sein, dass die Drossel im Brühprozess durch die Brühgruppe und die Drossel im Dampfprozess aus einer am Dampfauslass angeordneten Venturidüse gebildet ist.

Hierdurch verbleibt im Brühprozess zwischen der Heizung und der Brühgruppe und im Dampfprozess zwischen der Heizung und der Venturi-Düse eine gewisse Menge überschüssigen Heißwassers beziehungsweise eine gewisse Menge Restdampf, die beispielsweise bei einer zeitlich verzögerten darauf folgenden Getränkezubereitung oder Dampfzubereitung stören würden.

Um eine gezielt gesteuerte Abgabe des sowohl im Brühprozess als auch im Dampfprozess überschüssigen Heißwassers beziehungsweise Wasserdampfes zu ermöglichen, kann besonders bevorzugt vorgesehen sein, dass der weitere Ausgang zwischen der Heizung und der Brühgruppe und der weitere Ausgang zwischen der Heizung und dem Dampfauslass jeweils mit einem Eingang eines Drei-Zweiwegeventils verbunden sind, wobei das Drei-Zweiwegeventil zwei Eingänge und einen Ausgang aufweist, der Ausgang mittelbar oder unmittelbar mit der Expansions- und/oder der Kondensationskammer verbunden ist, wobei im Brühprozess das Drei-Zweiwegeventil ausschließlich nach erfolgter Getränkeerzeugung öffnet und im Dampfprozess das Drei-Zweiwegeventil während der Aufheizung zur Dampferzeugung geöffnet ist, anschließend während der Dampfabgabe geschlossen ist und nach Beendigung der Dampfabgabe wieder geöffnet ist.

Mittels eines derartig angeordneten Drei-Zweiwegeventils kann sowohl die gezielte Abgabe überschüssigen Druckes insbesondere im Brühprozess als auch eine Optimierung des Dampfprozesses erfolgen. Einerseits kann durch das erfindungsgemäße Drei-Zweiwegeventil das überschüssige Heißwasser beziehungsweise überschüssiger Wasserdampf gezielt in die Expansions- und/oder Kondensationskammer abgegeben werden, andererseits kann auch eine Abgabe von noch nicht ausreichend hohe Temperatur aufweisendem Wasserdampf aus dem Dampfauslass vermieden werden, in dem das Ventil während der Aufheizphase geöffnet ist.

Ein Ausführungsbeispiel der Erfindung ist in den Figuren dargestellt und im Folgenden näher beschrieben.

Es zeigt:

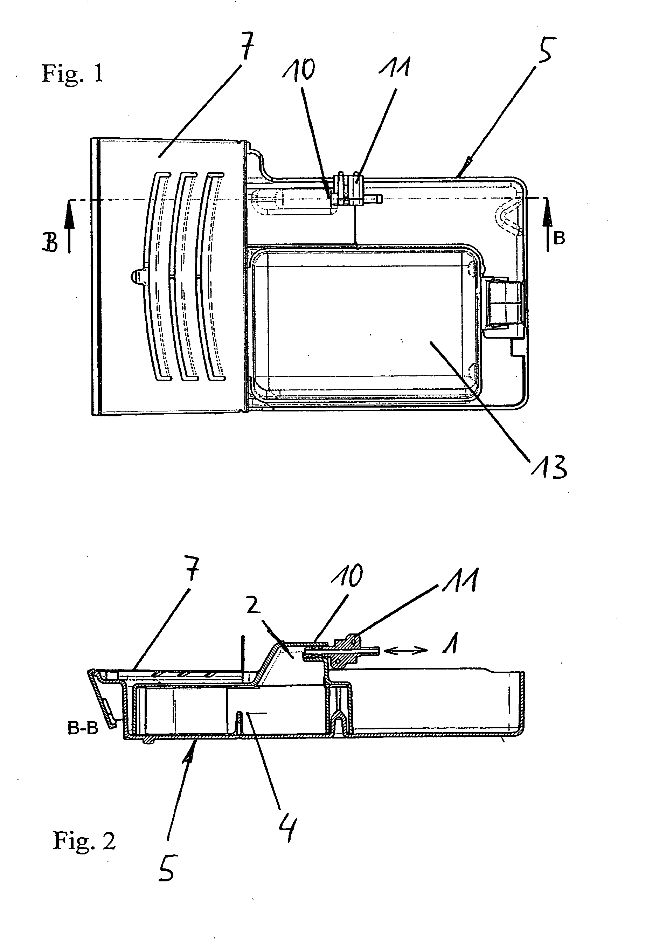

- Figur 1: eine erfindungsgemäße Auffangschale mit Haube, Tropfblech und Tresterbehälter in Draufsicht;
- Figur 2: desgleichen aus Figur 1 im Schnitt B-B der Figur 1 gesehen;
- Figur 3: desgleichen Figur 1 in Explosionsdarstellung;

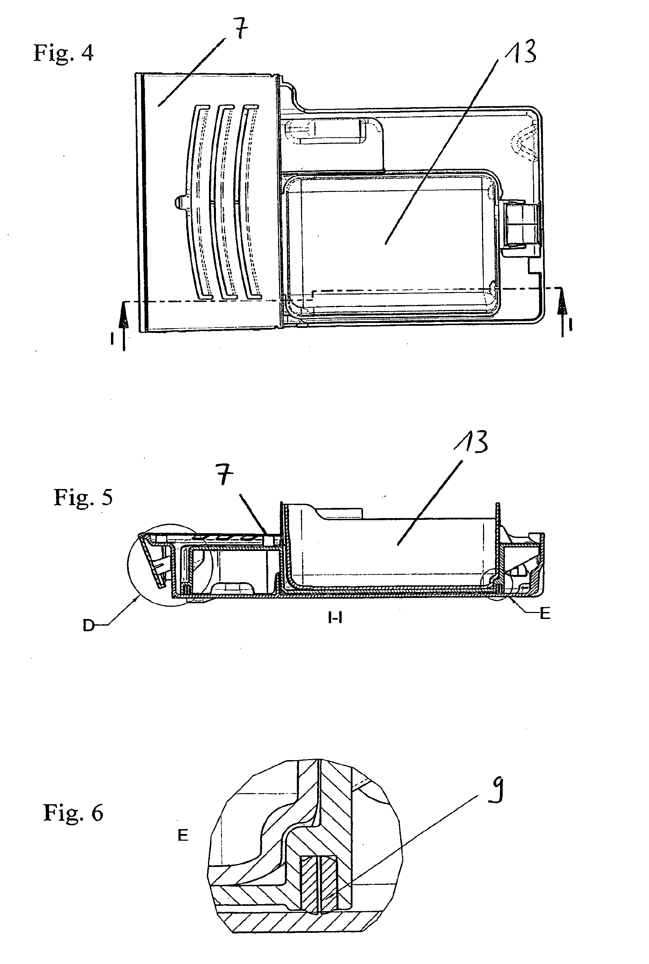

- Figur 4: desgleichen Figur 1 mit zusätzlicher Schnittlinie 1-1;
- Figur 5: Figur 4 im Schnitt 1-1 gesehen;
- Figur 6: eine Detailvergrößerung des Ausschnitts E der Figur 5;
- Figur 7: eine Detailvergrößerung des Ausschnitts D der Figur 5;

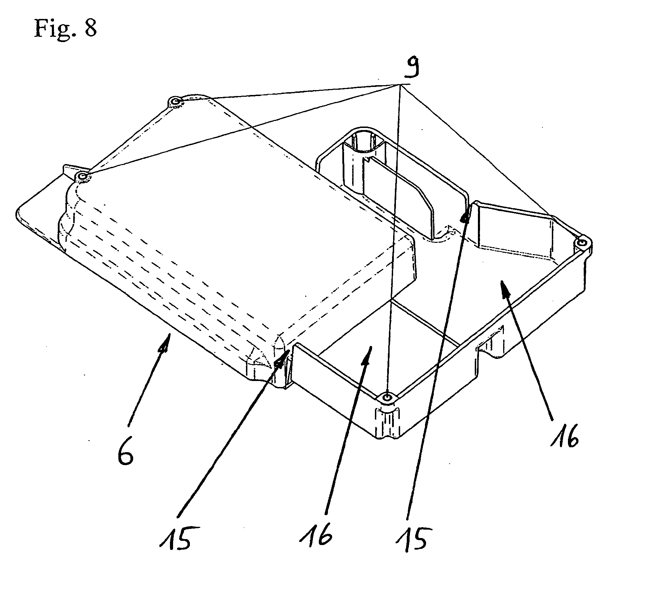

- Figur 8: eine erfindungsgemäße Haube von schräg unten gesehen.

In den Figuren ist ein Teil eines Heißgetränkeautomaten, wie beispielsweise eines Kaffeevollautomaten gezeigt. Bei dem Heißgetränkeautomaten erfolgt die Heißgetränkezubereitung mittels eines Brühprozesses und eines Dampfprozesses. Der Automat weist ein Gehäuse mit einer Abstellfläche für Getränkebehälter, insbesondere Tassen auf. Ferner weist der Automat mindestens ein Leitungssystems zur Übertragung des Heißwassers und des Wasserdampfes innerhalb des Gehäuses von der Heizung zu einer Brühgruppe beziehungsweise von der Heizung eines Dampferzeugers bis zu einem Getränkeauslass beziehungsweise einer Düse zur Dampfabgabe auf. Dabei ist im Leitungssystem im Brühprozess zwischen der Heizung und der Brühgruppe und im Dampfprozess zwischen der Heizung und dem Dampfauslass jeweils eine weitere Leitung zur Abgabe von überschüssigem Heißwasser beziehungsweise überschüssigem Dampf nach Fertigstellung des Getränkes beziehungsweise Abgabe des Dampfes angeordnet. Die jeweilige weitere Leitung weist jeweils einen weiteren, ventilgesteuerten Ausgang (bei 1) zur mittelbaren Verbindung mit einem Auffangbehälter zur Aufnahme des überschüssigen Heißwassers beziehungsweise des überschüssigen Heißdampfes auf.

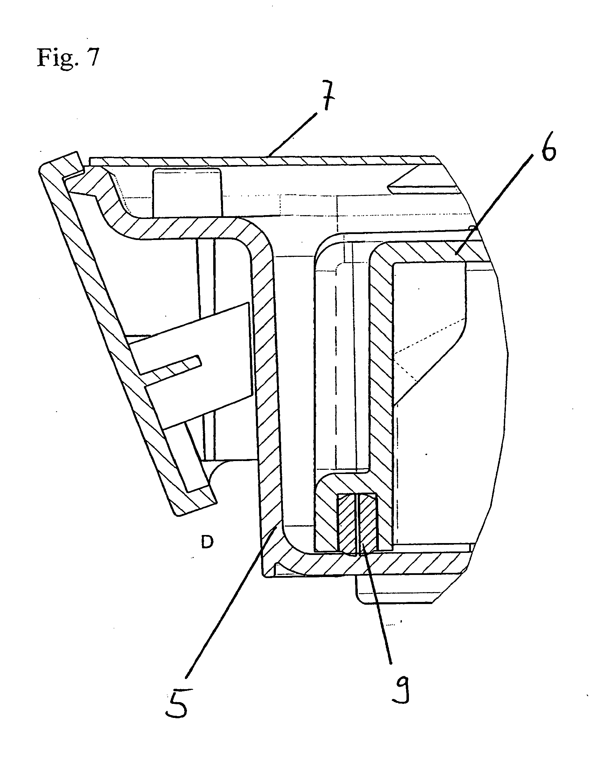

Erfindungsgemäß ist jeder weitere Ausgang (bei 1) mittelbar mit einer Expansions- und/oder Kondensationskammer 2 verbunden. Die Expansions- und/oder Kondensationskammer 2 ermöglicht ein gezieltes Entspannen und/oder Kondensieren des aus dem jeweiligen weiteren Ausgang austretenden Heißwassers und/oder des Wasserdampfes. Hierdurch ist eine Kondensation von Wasserdampf innerhalb des Gehäuseinneren des Heißgetränkeautomaten verhindert, so dass durch die Kondensation keinerlei Schaden auftreten kann. Zudem ist durch die gezielte Ausleitung des Wasserdampfes und/oder des unter Druck stehenden Wasserdampfes eine Verunreinigung durch aufgewirbeltes Wasser und eine für den Benutzer unerwünschte Geräuschentwicklung weitestgehend vermieden. Die Expansions- und/oder Kondensationskammer 2 weist einen ersten Kontaktbereich 3 zur Entspannung des Heißwassers und/oder zur Kondensation des Wasserdampfes und einen Auffangbereich 4 für das entspannte/kondensierte Wasser auf. Erfindungsgemäß ist die Expansions- und/oder Kondensationskammer 2 durch eine etwa schubladenartige Auffangschale 5 mit darauf aufgesetzter deckelartiger Haube 6 gebildet. Die Haube 6 ist dabei einerseits am dem Benutzer zugewandten vorderen Endbereich der Auffangschale 5 durch ein als Abstellfläche für Getränkebehälter, insbesondere Tassen, ausgebildetes Tropfblech 7 und andererseits durch eine am dem Benutzer abgewandten Ende der Auffangschale 5 ausgebildete Rippe 8 in der Gebrauchslage gehalten. Bei dem in den Figuren gezeigten Ausführungsbeispiel ist das als Abstellfläche für Getränkebehälter ausgebildete Tropfblech 7 von der Haube 6 beabstandet (siehe Figur 7). Alternativ und in den Figuren nicht gezeigt, kann das als Abstellfäche für Getränkebehälter ausgebildete Tropfblech 7 unmittelbar mit der Haube 6 oder mittelbar mittels Anordnung einer Masse aus gut wärmeleitendem Material zwischen Haube 6 und Tropfblech 7 verbunden sein. Hierdurch erfolgt ein Wärmeübergang von der Haube 6 auf das Tropfblech 7, so dass beispielsweise darauf abgestellte Getränkebehälter wie Tassen vorgewärmt werden können.

Die Haube 6 weist im Ausführungsbeispiel vier elastische Elemente als Standfüße 9 auf, auf denen die Haube 6 innerhalb der Auffangschale 5 vom Boden der Auffangschale 5 beabstandet steht. Hierdurch verbleibt zwischen den über dem Boden der Auffangschale 5 angeordneten flächigen Teilen der Haube 6 und dem Boden der Auffangschale 5 ein Abstand von etwa 1 mm, so dass eine Wasserverteilung in diesem Bereich ermöglicht ist.

Im Ausführungsbeispiel ist an der Haube 6 eine Aufnahme 10 für ein am Gehäuse angeordnetes Verbindungsstück 11 zur Übertragung des Heißwassers und/oder des Wasserdampfes vom jeweiligen weiteren Ausgang (bei 1) in die Expansions- und/oder Kondensationskammer 2 ausgebildet.

An der Haube 6 ist ein napfartiger Bereich 12 zur Aufnahme und Halterung eines Tresterbehälters 13 ausgebildet.

Am Boden der Auffangschale 5 ist im Ausführungsbeispiel eine quer zur Einschubrichtung verlaufende Rippe 14 angeordnet. Dabei ist an der Haube 6 im Bereich der Rippe 14 eine die Rippe 14 mit geringem Abstand übergreifende Nut 15 angeordnet. Hierdurch ist zum einen das lagerichtige Einsetzen der Haube 6 in die Auffangschale 5 erleichtert und zum anderen ein gezielter Wasserfluss beziehungsweise eine gezielte Wasserverteilung innerhalb der Auffangschale 5 ermöglicht.

In den Figuren nicht gezeigt kann am ersten Kontaktbereich 3 zur Entspannung des Heißwassers und/oder zur Kondensation des Wasserdampfes ein Kühlkörper aus einem gut wärmeleitendem Material, beispielsweise Aluminium, gegebenenfalls mit Stegen zur Aufnahme und gleichmäßigen Verteilung von Wärme angeordnet sein.

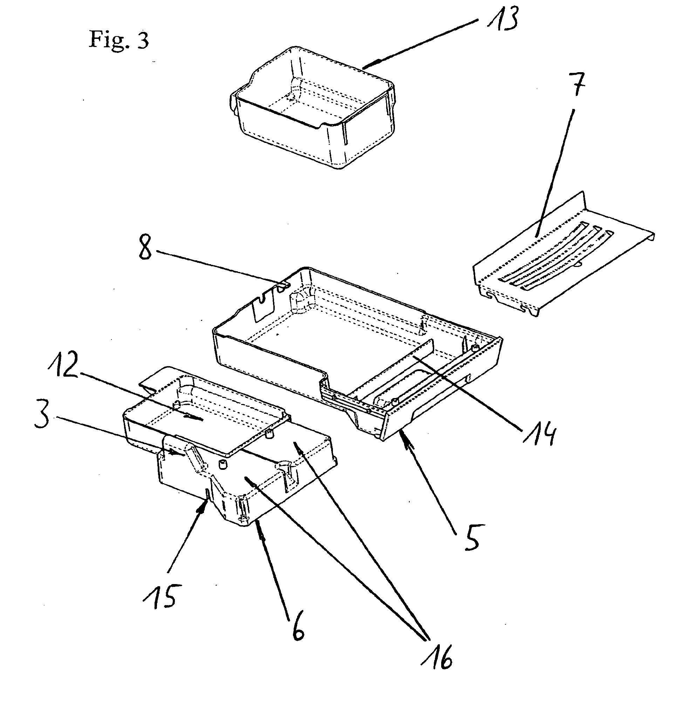

Eine mögliche Lage eines derartigen Kühlkörpers aus einem gut wärmeleitenden Material ist beispielsweise an den mit dem Bezugszeichen 16 in Figur 3 gezeigten Stellen bevorzugt möglich, da ein an dieser Stelle angeordneter Kühlkörper dazu geeignet ist, aufgenommene Wärme auf das Tropfblech 7 zu übertragen, und somit ein Vorwärmen von auf dem Tropfblech 7 abgestellten Tassen ermöglicht.

Somit kann ein derartiger Kühlkörper die aufgenommene Wärme gezielt an das als Abstellfläche für Getränkebehälter ausgebildete Tropfblech 7 abgeben.

Im Brühprozess ist die Brühgruppe und im Dampfprozess eine am Dampfauslass angeordnete Venturi-Düse als Drossel des jeweiligen Prozesses ausgebildet. Dabei ist der weitere Ausgang zwischen der Heizung und der Brühgruppe und der weitere Ausgang zwischen der Heizung und dem Dampfauslass jeweils mit einem Eingang eines Drei-Zweiwegeventils verbunden. Dabei weist das Drei-Zweiwegeventil zwei Eingänge und einen Ausgang auf, der mittelbar oder unmittelbar mit der Expansions- und/oder der Kondensationskammer 2 verbunden ist. Das Drei-Zweiwegeventil öffnet im Brühprozess ausschließlich nach erfolgter Getränkeerzeugung um überschüssigen Druck beziehungsweise überschüssiges Heißwasser im Leitungssystem zwischen der Heizung und der Brühgruppe abzubauen. Während des Dampfprozesses öffnet das Drei-Zweiwegeventil bereits während der Aufheizung der Dampferzeugung solange, bis ausreichend Dampf durch die Heizung zur Verfügung gestellt ist, und schließt anschließend während der Dampfabgabe um die Dampfabgabe durch den Dampfauslass zu ermöglichen. Nach Beendigung der Dampfabgabe ist das Drei-Zweiwegeventil wiederum geöffnet, um einerseits überschüssigen Dampf abzugeben und andererseits ein ungewünschtes Nachtropfen aus dem Dampfauslass andererseits zu vermeiden.

Die Erfindung ist nicht auf das Ausführungsbeispiel beschränkt, sondern im Rahmen der Offenbarung vielfach variabel.

## Patentansprüche

1. Heißgetränkemaschine oder -automat, insbesondere Kaffeevollautomat, bei der oder dem die Heißgetränkezubereitung mittels eines Brühprozesses und / oder eines Dampfprozesses erfolgt, die ein Gehäuse mit einer Abstellfläche für Getränkebehälter aufweist, die mindestens ein Leitungssystem zur Übertragung des Heißwassers und / oder des Wasserdampfes innerhalb des Gehäuses von einer Heizung einer Brühgruppe oder einer Heizung eines Dampferzeugers bis zu einem Getränkeauslass oder einer Düse zur Dampfabgabe aufweist, wobei im Leitungssystem zwischen der Heizung der Brühgruppe und dem Getränkeauslass oder der Heizung des Dampferzeugers und dem Dampfauslass jeweils eine weitere Leitung zur Abgabe von überschüssigem Heißwasser oder Dampf nach Fertigstellung des Getränkes oder Abgabe des Dampfes angeordnet ist, die jeweils einen weiteren, ventilgesteuerten Ausgang (1) zur mittelbaren Verbindung mit einem Auffangbehälter zur Aufnahme des überschüssigen Heißwassers oder des überschüssigen Heißdampfes aufweist, wobei jeder weitere Ausgang (1) mittelbar oder unmittelbar mit einer Expansions- und/oder Kondensationskammer (2) verbunden ist, die ein gezieltes Entspannen
und / oder Kondensieren des aus dem jeweiligen weiteren Ausgang austretenden Heißwassers und / oder des Wasserdampfes ermöglicht, **dadurch gekennzeichnet, dass** die Expansions- und / oder Kondensationskammer (2) durch eine etwa schubladenartigen Auffangschale (5) mit deckelartiger Haube (6) gebildet ist, wobei die Haube (6) einerseits am dem Benutzer zugewandten vorderen Endbereich der Auffangschale (5) durch ein als Abstellfläche für Getränkebehälter ausgebildetes Tropfblech (7) und andererseits durch eine am dem Benutzer abgewandten Ende der Auffangschale (5) ausgebildete Rippe (8) in der Gebrauchslage gehalten ist, und dass an der Haube (6) mehrere elastische Elemente als Standfüße (9) angeordnet oder ausgebildet sind, auf denen die Haube (6) innerhalb der Auffangschale (5) vom Boden der Auffangschale (5) beabstandet steht.

2. Heißgetränkemaschine oder -automat nach Anspruch 1, **dadurch gekennzeichnet, dass** die Expansions-
und / oder Kondensationskammer (2) einen ersten Kontaktbereich (3) zur Entspannung des Heißwassers und / oder zur Kondensation des Wasserdampfes und einen Auffangbereich (4) für das entspannte / kondensierte Wasser aufweist.

3. Heißgetränkemaschine oder -automat nach Anspruch 1, **dadurch gekennzeichnet, dass** das als Abstellfläche für Getränkebehälter ausgebildete Tropfblech (7) von der Haube (6) beabstandet ist.

4. Heißgetränkemaschine oder -automat nach Anspruch 1, **dadurch gekennzeichnet, dass** das als Abstellfläche für Getränkebehälter ausgebildete Tropfblech (7) unmittelbar oder mittelbar durch eine zwischen Haube (6) und Tropfblech (7) angeordnete, aus gut wärmeleitenden Material bestehende Masse, mit der Haube (6) verbunden ist.

5. Heißgetränkemaschine oder -automat nach Anspruch 1, **dadurch gekennzeichnet, dass** der durch die Standfüße (9) bedingte Abstand zwischen Haube (6) und Boden der Auffangschale etwa 1 mm beträgt.

6. Heißgetränkemaschine oder -automat nach einem der Ansprüche 1 bis 5, **dadurch gekennzeichnet, dass** an der Haube (6) eine Aufnahme (10) für ein am Gehäuse angeordnetes Verbindungsstück (11) zur Übertragung des Heißwassers und / oder Wasserdampfes vom weiteren Ausgang (1) des Dreiwegeventils in die Expansions- und / oder Kondensationskammer (2) ausgebildet ist.

7. Heißgetränkemaschine oder -automat nach einem der Ansprüche 1 bis 6, **dadurch gekennzeichnet, dass** an der Haube (6) ein napfartiger Bereich (12) zur Aufnahme und Halterung eines Tresterbehälters (13) ausgebildet ist.

8. Heißgetränkemaschine oder -automat nach einem der Ansprüche 1 bis 7, **dadurch gekennzeichnet, dass** am Boden der Auffangschale (5) mindestens eine quer zur Einschubrichtung verlaufende Rippe (14) angeordnet ist, wobei an den entsprechenden Seitenwänden der Haube (6) im Bereich der Rippe (14) eine die Rippe (14) mit geringem Abstand übergreifende Nut (15) angeordnet ist.

9. Heißgetränkemaschine oder -automat nach einem der Ansprüche 2 bis 8, **dadurch gekennzeichnet, dass** der erste Kontaktbereich (3) zur Entspannung des Heißwassers und / oder zur Kondensation des Wasserdampfes durch einen Kühlkörper aus einem gut wärmeleitenden Material, beispielsweise Aluminium, gebildet ist, wobei der Kühlkörper mindestens einen Steg,
vorzugsweise mehrere Stege aufweist, mittels derer die aufgenommene Wärme gleichmäßig innerhalb der Kammer verteilt und / oder gezielt an die Umgebung, beispielsweise an die als Tropfblech (7) ausgebildete Abstellfläche für Getränkebehälter abgegeben oder abgebbar ist.

10. Heißgetränkemaschine oder -automat nach einem der Ansprüche 1 bis 9, **dadurch gekennzeichnet, dass** im Brühprozess zwischen der Heizung und dem Getränkeauslass und / oder im Dampfprozess zwischen der Heizung und dem Dampfauslass jeweils eine Drossel angeordnet ist.

11. Heißgetränkemaschine oder -automat nach Anspruch 10, **dadurch gekennzeichnet, dass** die Drossel im Brühprozess durch die Brühgruppe und die Drossel im Dampfprozess aus einer am Dampfauslass angeordneten Venturidüse gebildet ist.

12. Heißgetränkemaschine oder -automat nach einem der Ansprüche 1 bis 11, **dadurch gekennzeichnet, dass** der weitere Ausgang zwischen der Heizung und der Brühgruppe und der weitere Ausgang zwischen der Heizung und dem Dampfauslass jeweils mit einem Eingang eines Drei-Zweiwegeventils verbunden sind, wobei das Drei-Zweiwegeventil zwei Eingänge und einen Ausgang aufweist, der Ausgang mittelbar oder unmittelbar mit der Expansions- und/oder der Kondensationskammer (2) verbunden ist, wobei im Brühprozess das Drei-Zweiwegeventil ausschließlich nach erfolgter Getränkeerzeugung geöffnet ist und im Dampfprozess das Drei-Zweiwegeventil während der Aufheizung zur Dampferzeugung geöffnet ist, anschließend während der Dampfabgabe geschlossen ist und nach Beendigung der Dampfabgabe wieder geöffnet ist.

## Claims

1. A hot beverage machine or an automatic hot drink device, in particular a fully automatic coffee machine, wherein the hot beverage is prepared by means of a brewing process and/or a steam process, comprising a housing having a placement surface for beverage containers, comprising at least one duct system for the transfer of the hot water and/or of the water steam within said housing from a heater of a brewing unit or a heater of a steam generator to a beverage outlet or a nozzle for steam outlet, wherein in the duct system between the heater of the brewing unit and the beverage outlet or the heater of the steam generator and the steam outlet a further duct is respectively arranged for discharging excess hot water or steam after the completion of the beverage or discharging of the steam, which duct respectively comprises a further valve-controlled outlet (1) for an indirect connection to a collector for receiving the excess hot water or the excess hot steam, wherein each additional outlet (1) is connected directly or indirectly with an expansion and/or condensation chamber (2), which enables a targeted expanding and/or condensing of the hot water and/ or steam exiting from the respective further outlet, **characterized in that** the expansion and/or condensation chamber (2) is formed by a substantially drawer-like collector bowl (5) with a lid-like hood (6), the hood (6) being held in the position of use on the one hand on the front end of the collector bowl (5) showing toward the user by a drip pan (7) adapted as a placement surface for beverage containers and on the other hand by a rib (8) formed on the end of the collector bowl (5) showing away from the user, and that at the hood (6) a plurality of elastic elements are arranged or formed as support feet (9), on which the hood (6) is supported inside the collector bowl (5) spaced from the bottom of the collector bowl (5).

2. The hot beverage machine or automatic device according to claim 1, **characterized in that** the expansion and/or condensation chamber (2) has a first contact region (3) for expanding the hot water and/or for condensing the water steam and a collector portion (4) for the expanded/condensed water.

3. The hot beverage machine or automatic device according to claim 1, **characterized in that** the drip pan (7) adapted as a placement surface for beverage containers is spaced from the hood (6).

4. The hot beverage machine or automatic device according to claim 1, **characterized in that** the drip pan (7) adapted as a placement surface for beverage containers is connected directly or indirectly with the hood (6) by a material having a good thermal conductivity and being arranged between hood (6) and drip pan (7).

5. The hot beverage machine or automatic device according to claim 1, **characterized in that** due to the feet (9), the distance between the hood (6) and the bottom of the collector bowl is approximately 1 mm.

6. The hot beverage machine or automatic device according to one of claims 1 to 5, **characterized in that** at the hood (6), a receptacle (10) for a connecting piece (11) is formed at the housing for transferring the hot water and/or the water steam from the further outlet (1) of the three-way valve into the expansion and/or condensation chamber (2) .

7. The hot beverage machine or automatic device according to one of claims 1 to 6, **characterized in that** at the hood (6), a bowl-like region (12) is formed for receiving and holding a residues container (13).

8. The hot beverage machine or automatic device according to one of claims 1 to 7, **characterized in that** at the bottom of the collector bowl (5), at least one rib (14) extending transversely to the insertion direction is arranged, on the respective side walls of the hood (6) in the region of the rib (14) a groove (15) overlapping the rib (14) at a small distance being arranged.

9. The hot beverage machine or automatic device according to one of claims 2 to 8, **characterized in that** the first contact region (3) for expanding the hot water and/or for condensing the water steam is formed by a cooling body made of a material having a good thermal conductivity such as aluminum, said cooling body comprising at least one web, preferably a plurality of webs, by means of which the absorbed heat is uniformly distributed within the chamber and/or is specifically discharged or can be discharged in a targeted manner to the environment, for example to the placement surface for beverage containers adapted as a drip pan (7).

10. The hot beverage machine or automatic device according to one of claims 1 to 9, **characterized in that** in the brewing process between the heater and the beverage outlet, and/or in the steam process between the heater and the steam outlet, a throttle is respectively arranged.

11. The hot beverage machine or automatic device according to claim 10, **characterized in that** the throttle in the brewing process is formed by the brewing unit and the throttle in the steam process is formed by a Venturi nozzle arranged at the steam outlet.

12. The hot beverage machine or automatic device according to one of claims 1 to 11, **characterized in that** the further outlet between the heater and the brewing unit and the further outlet between the heater and the steam outlet are each connected to an inlet of a three-two-way valve, the three-two-way valve having two inlets and one outlet, the outlet being directly or indirectly connected to the expansion and/or condensation chamber (2), in the brewing process, the three-two-way valve being open only after the beverage has been prepared, and in the steam process, the three-two-way valve being open during heating-up for generating steam, thereafter during the steam discharge being closed, and after completion of the steam discharge being open again.

## Revendications

1. Machine ou automate de boissons chaudes, en particulier machine à café totalement automatique, dans laquelle la boisson chaude est préparée au moyen d'un procédé de percolation et/ou un procédé de vapeur, comprenant un boîtier ayant une surface de dépose pour des réservoirs de boisson, comprenant au moins un système de tuyauterie pour le transfert de l'eau chaude et/ou de la vapeur d'eau au-dedans du boîtier à partir d'un dispositif de chauffage d'un groupe de percolation ou un dispositif de chauffage d'un générateur de vapeur à une sortie de boisson ou une buse pour la sortie de vapeur, dans le système de tuyauterie entre le dispositif de chauffage du groupe de percolation et la sortie de boisson ou le dispositif de chauffage du générateur de vapeur et la sortie de vapeur un tuyau additionnel étant respectivement agencé pour éliminer de l'eau chaude ou vapeur en excès après l'achèvement de la boisson ou l'élimination de la vapeur, ce tuyau respectivement comprenant une sortie (1) additionnelle commandée par vanne pour un liage indirect à un collecteur pour recevoir l'eau chaude en excès ou la vapeur chaude en excès, chaque sortie (1) additionnelle étant liée directement ou indirectement à une chambre (2) d'expansion et/ou de condensation, qui permet une expansion et/ou condensation ciblée de l'eau chaude et/ou de la vapeur d'eau sortant de la sortie respective additionnelle, **caractérisée en ce que** la chambre d'expansion et/ou de condensation (2) est réalisée par un récipient (5) essentiellement en forme de tiroir avec un capot (6) en forme de couvercle, le capot (6) étant maintenu dans la position d'utilisation d'un côté à l'extrémité avant du récipient (5) en vis-à-vis de l'utilisateur par une plaque égouttoir (7) agencée comme surface de dépose pour des réservoirs de boisson et de l'autre côté par une nervure (8) réalisée sur l'extrémité du récipient (5) opposée à l'utilisateur, et qu'au capot (6) une pluralité d'éléments élastiques sont disposés ou réalisés comme des pieds (9), sur lesquels le capot (6) est posé au dedans du récipient (5) à distance du fond du récipient (5).

2. Machine ou automate de boissons chaudes selon la revendication 1, **caractérisée en ce que** la chambre d'expansion et/ou de condensation (2) a une première région de contact (3) pour la détente de l'eau chaude et/ou la condensation de la vapeur d'eau et une partie de collection (4) pour l'eau détendue/condensée.

3. Machine ou automate de boissons chaudes selon la revendication 1, **caractérisée en ce que** la plaque égouttoir (7) agencée comme surface de dépose pour des réservoirs de boisson est espacée du capot (6).

4. Machine ou automate de boissons chaudes selon la revendication 1, **caractérisée en ce que** la plaque égouttoir (7) agencée comme surface de dépose pour des réservoirs de boisson est liée directement ou indirectement au capot (6) par une matière hautement conductrice de chaleur disposée entre le capot (6) et la plaque égouttoir (7).

5. Machine ou automate de boissons chaudes selon la revendication 1, **caractérisée en ce que** la distance associée aux pieds (9) entre le capot (6) et le fond du récipient est d'environ 1 mm.

6. Machine ou automate de boissons chaudes selon une des revendications 1 à 5, **caractérisée en ce qu'**au capot (6), un logement (10) pour une pièce de liage (11) est réalisé au boîtier pour transférer l'eau chaude et/ou la vapeur d'eau à partir de la sortie (1) additionnelle de la vanne à trois voies dans la chambre d'expansion et/ou de condensation (2).

7. Machine ou automate de boissons chaudes selon une des revendications 1 à 6, **caractérisée en ce qu'**au capot (6), une région (12) de type godet est réalisée pour recevoir et maintenir un récipient à marc (13).

8. Machine ou automate de boissons chaudes selon une des revendications 1 à 7, **caractérisée en ce qu'**au fond du récipient (5), au moins une nervure (14) s'étendant transversalement à la direction d'insertion est disposée, aux parois latérales respectives du capot (6) dans la région de la nervure (14) une rainure (15) saisissant par le haut la nervure (14) à une faible distance étant disposée.

9. Machine ou automate de boissons chaudes selon une des revendications 2 à 8, **caractérisée en ce que** la première région de contact (3) pour détendre l'eau chaude et/ou pour condenser la vapeur d'eau est réalisée par un corps de refroidissement en une matière hautement conductrice de chaleur comme p.ex. l'aluminium, ce corps de refroidissement comprenant au moins une entretoise, de préférence une pluralité d'entretoises, au moyen desquelles la chaleur absorbée est distribuée uniformément au-dedans de la chambre et/ou est transférée ou peut être transférée de manière ciblée à l'environnement, par exemple à la surface de dépose pour des réservoirs de boisson agencée comme plaque égouttoir (7).

10. Machine ou automate de boissons chaudes selon une des revendications 1 à 9, **caractérisée en ce que** dans le procédé de percolation entre le dispositif de chauffage et la sortie de boisson, et/ou dans le procédé de vaporisation entre le dispositif de chauffage et la sortie de vapeur, une vanne d'étranglement est respectivement disposée.

11. Machine ou automate de boissons chaudes selon la revendication 10, **caractérisée en ce que** la vanne d'étranglement dans le procédé de percolation est réalisée par le groupe de percolation et la vanne d'étranglement dans le procédé de vaporisation est réalisée par un tube de Venturi disposé à la sortie de vapeur.

12. Machine ou automate de boissons chaudes selon une des revendications 1 à 11, **caractérisée en ce que** la sortie additionnelle entre le dispositif de chauffage et le groupe de percolation et la sortie additionnelle entre le dispositif de chauffage et la sortie de vapeur sont chacune liées à une entrée d'une vanne à trois-deux voies, la vanne à trois-deux voies ayant deux entrées et une sortie, la sortie étant lié directement ou indirectement à la chambre d'expansion et/ou de condensation (2), dans le procédé de percolation, la vanne à trois-deux voies étant ouverte seulement après l'achèvement de la boisson, et dans le procédé de vapeur, la vanne à trois-deux voies étant ouverte pendant le chauffage pour générer la vapeur, puis pendant l'élimination de la vapeur étant fermée, et après la terminaison de l'élimination de la vapeur étant de nouveau ouverte.
